# EUROPEAN PATENT APPLICATION

(11) **EP 4 797 062 A1**
(43) Date of publication of application: **26.08.2026**
(21) Application number: 24878657.6
(22) Date of filing: 15.08.2024
(51) Int. Cl.: G06F 3/0482, G06F 3/0481, G06F 3/0484, G06F 3/04842, G06F 9/451

(54) **PAGE INTERACTION METHOD AND APPARATUS, AND DEVICE AND STORAGE MEDIUM**

(30) Priority: 19.10.2023 CN 202311360044
(71) Applicant: Beijing Zitiao Network Technology Co., Ltd., Beijing 100190 (CN)
(72) Inventor: WANG, Lei, Beijing 100028 (CN); LI, Ke, Beijing 100028 (CN); ZHANG, Wei, Beijing 100028 (CN)
(74) Representative: Grünecker Patent- und Rechtsanwälte PartG mbB
(86) International application number: PCT/CN2024/112345
(87) International publication number: WO 2025/082005

(57) **Abstract**

According to embodiment of the disclosure, there are provided a method, apparatus, device and a storage medium for page interaction. The method includes: presenting a content display page at least for presenting a media content item; providing, in response to detecting a preset trigger operation, an operation panel in an active layer of the content display page, the media content item being presented in a background layer of the content display page, the operation panel at least including a plurality of options respectively corresponding to a plurality of view modes, and presenting, in response to detecting a selection operation on a first option of the plurality of options, the media content item in a first view mode corresponding to the first option in the background layer of the content display page while maintaining presentation of the operation panel in the active layer of the content display page. Therefore, the user may be enabled to quickly and directly preview the content display effect under different views, and the user may be allowed to easily switch to other view modes before the user does not select the satisfactory view mode.

## Description

This application claims the benefit of Chinese Patent Application No. 202311360044.0, entitled "Method, Apparatus, Device, and Storage Medium for Page Interaction," filed October 19, 2023, the entire content of which is incorporated herein by reference.

### FIELD

Example embodiments of the present disclosure generally relate to the field of computers, and in particular, to a method, apparatus, device, and computer-readable storage medium for page interaction.

### BACKGROUND

Currently, more and more applications are designed to provide various services to users. For example, a user may post, browse, and view various types of content in an application, comprising multimedia content such as videos, images, image sets, sounds, and the like. The user may also interact with other users in the application, for example, liking, favoriting, commenting on the content post by other users, or following other users, accessing personal homepages of other users, and the like.

### SUMMARY

In a first aspect of the present disclosure, a method for page interaction is provided. The method comprises: presenting a content display page at least for presenting a media content item; providing, in response to detecting a preset trigger operation, an operation panel in an active layer of the content display page, the media content item being presented in a background layer of the content display page, the operation panel at least comprising a plurality of options respectively corresponding to a plurality of view modes; and presenting, in response to detecting a selection operation on a first option of the plurality of options, the media content item in a first view mode corresponding to the first option in the background layer of the content display page while maintaining presentation of the operation panel in the active layer of the content display page.

In a second aspect of the present disclosure, an apparatus for page interaction is provided. The apparatus comprises: a page presenting module configured to present a content display page at least for presenting a media content item; a panel providing module configured to provide, in response to detecting a preset trigger operation, an operation panel in an active layer of the content display page, the media content item being presented in a background layer of the content display page, the operation panel at least comprising a plurality of options respectively corresponding to a plurality of view modes; and a content item presenting module configured to present, in response to detecting a selection operation on a first option of the plurality of options, the media content item in a first view mode corresponding to the first option in the background layer of the content display page while maintaining presentation of the operation panel in the active layer of the content presentation page.

In a third aspect of the present disclosure, an electronic device is provided. The device comprises at least one processing unit; and at least one memory coupled to the at least one processing unit and storing instructions for execution by the at least one processing unit, the instructions upon execution by the at least one processing unit, causing the electronic device to perform the method of the first aspect.

In a fourth aspect of the present disclosure, a computer-readable storage medium is provided. The computer-readable storage medium storing a computer program thereon, the computer program executable by a processor to implement the method of the first aspect.

It should be understood that the content described in this content section is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the accompanying drawings, the same or similar numerals reference the same or similar elements, where:
FIG. 1 illustrates a schematic diagram of an example environment in which embodiments of the present disclosure may be implemented;
FIGs. 2A-2H illustrate schematic diagrams of example content display pages according to some embodiments of the present disclosure;
FIG. 3 illustrates a flowchart of a process for page interaction according to some embodiments of the present disclosure;
FIG. 4 illustrates a block diagram of an apparatus for page interaction according to some embodiments of the present disclosure; and
FIG. 5 illustrates a block diagram of a device capable of implementing various embodiments of the present disclosure.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as limited to the embodiments set forth herein, but rather, these embodiments are provided for a more thorough and complete understanding of the present disclosure. It should be understood that the accompanying drawings and embodiments of the present disclosure are for exemplary purposes only and are not intended to limit the scope of the present disclosure.

In the description of the embodiments of the present disclosure, the terms "comprising" and the like should be understood to include "comprising but not limited to". The term "based on" should be understood as "at least partially based on". The terms "one embodiment" or "the embodiment" should be understood as "at least one embodiment". The term "some embodiments" should be understood as "at least some embodiments". Other explicit and implicit definitions may also be included below.

Herein, unless explicitly stated, "in response to A" performs one step and does not imply that this step is performed immediately after "A", but may include one or more intermediate steps.

It may be understood that the data involved in the technical solution (including but not limited to the data itself, the obtaining or use of the data) should follow the requirements of the corresponding laws and regulations and related provisions.

It may be understood that, before the technical solutions disclosed in the embodiments of the present disclosure are used, the types, the usage scope, the usage scenario and the like of personal information related to the present disclosure should be notified to the user in an appropriate manner according to the relevant laws and regulations, and the authorization of the user is obtained.

For example, in response to receiving an active request from a user, prompt information is sent to the user to explicitly prompt the user that the requested operation will need to obtain and use personal information of the user, so that the user may autonomously select whether to provide personal information to software or hardware, such as an electronic device, application, server, or storage medium, etc., executing the operation of the technical solution of the present disclosure according to the prompt information.

As an optional but non-limiting implementation, in response to receiving an active request of the user, a manner of sending prompt information to the user may be, for example, a pop-up window, and prompt information may be presented in a text manner in the pop-up window. In addition, the pop-up window may further carry a selection control for the user to select "agree" or "not agree" to provide personal information to the electronic device.

It may be understood that the foregoing process for noticing and obtaining a user authorization are merely illustrative, and do not constitute a limitation on implementations of the present disclosure, and other manners of meeting related laws and regulations may also be applied to implementations of the present disclosure.

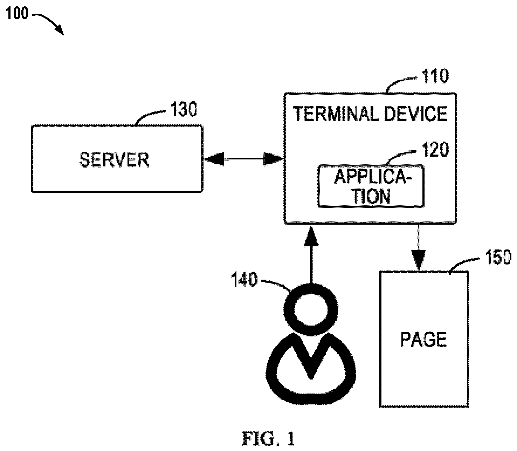

FIG. 1 illustrates a schematic diagram of an example environment 100 in which embodiments of the present disclosure may be implemented. In this example environment 100, an application 120 is installed in a terminal device 110. A user 140 may interact with the application 120 via the terminal device 110 and/or an attached device of the terminal device 110.

In some embodiments, the application 120 may be a content sharing application (e.g., a video application mainly sharing videos) capable of providing various services related to the media content item to the user 140, including browsing, commenting, forwarding, creating (e.g., shooting and/or editing), posting, and the like, related to the content. In some embodiments, the application 120 may also be any other suitable application, where media content items may be displayed. Herein, each "media content item" includes one or more types of content, such as videos, images, animated images, image sets, audio, text, and the like.

In environment 100 of FIG. 1, the terminal device 110 may present page 150 of application 120 if the application 120 is active. The page 150 may include various pages that the application 120 may provide, such as a content presenting page, a content creating page, a content posting page, a message page, a personal homepage, and so forth. The application 120 may provide content viewing function to view various types of content posted in the application 120. The application 120 may provide content associated with the media content or shopping content to the user 140 via a corresponding page. With appropriate manners, such as clicking or selecting a page element, the application 120 may also provide the user 140 with the selection and switching of the presentation of the associated content. As used herein, "the media content" includes one or more types of content, such as images, image sets, videos, animated images, audio, text, and the like.

In some embodiments, the terminal device 110 communicates with server 130 to enable provisioning of services to application 120. The terminal device 110 may be any type of a mobile terminal, a fixed terminal, or a portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an electronic book device, a gaming device, or any combination of the foregoing, including accessories and peripherals of these devices, or any combination thereof. In some embodiments, the terminal device 110 may also support any type of interface for a user (such as a "wearable" circuit, etc.). The server 130 may be various types of computing systems/servers capable of providing computing power, including, but not limited to, mainframes, edge computing nodes, computing devices in a cloud environment, and the like.

It should be understood that the structures and functions of the various elements in the environment 100 are described for illustrative purposes only and do not imply any limitation to the scope of the present disclosure.

Generally, a recommended media content item is displayed in a particular content display page of an application, such as a navigation tab "recommendation" page. However, these media content items are all organized and displayed in a fixed manner, e.g., such media content is typically presented in a single column. However, the user may have different requirements for the media content presented by the content display page. For example, when a user needs to quickly browse a large amount of media content, the user expects the content display page to simultaneously present as much media content as possible. When a user needs to more accurately focus on the media content of interest, the user may expect the content display page to present relatively less media content at the same time. A single organizing and presenting mode cannot meet the requirements of users in different situations, resulting in poor user experience.

According to an embodiment of the present disclosure, a solution for page interaction is provided. According to the solution of the embodiments of the present disclosure, at least a content display page for presenting a media content item is presented. If a preset trigger operation is detected, an operation panel is provided in the active layer of the content display page. The media content item is presented in a background layer of the content display page, the operation panel at least includes a plurality of options respectively corresponding to the plurality of view modes. If a selection operation on a first option of the plurality of options is detected, the media content item is presented in a first view mode corresponding to the first option in the background layer of the content display page while maintaining presentation of the operation panel in the active layer of the content display page.

In this way, by providing the preset operation panel for view switching, and providing the preview effect of the switching result on the background layer in the process of selecting the view by the user, the user may quickly and directly preview the content display effect under different views, so that a satisfactory mode may be selected from the plurality of view modes. In addition, since the operation panel always maintains presenting, the user is always able to know the optional view mode. In this way, it is possible to allow easy switching to other view modes before the user does not select a satisfactory view mode.

Some example embodiments of the present disclosure will be described below with continued reference to the accompanying drawings.

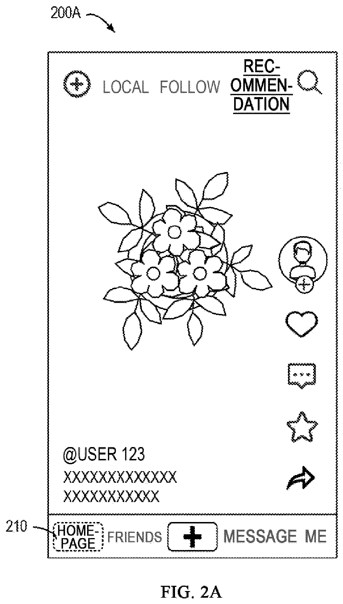

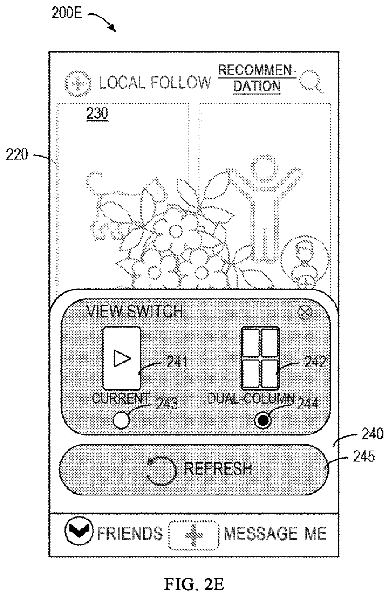

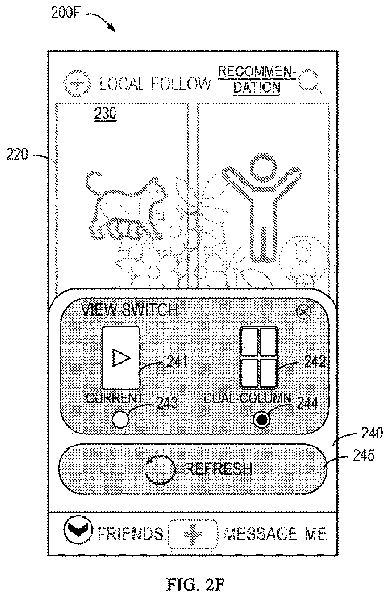

FIGs. 2A-2H illustrate schematic diagrams of example content display pages 200A to 200H (which may also be referred to simply as examples 200A to 200H), in accordance with some embodiments of the present disclosure. It should be understood that the pages shown in the drawings are merely examples, and various page designs may actually exist. Respective graphical elements in a page may have different arrangements and different visual representations, where one or more elements may be omitted or replaced, and one or more other elements may also exist. Embodiments of the present disclosure are not limited in this respect.

The pages shown in examples 200A to 200H may be presented at the terminal device 110. For ease of discussion, the examples 200A to 200H will be described with reference to the environment 100 of FIG. 1.

In the environment 100, the terminal device 110 presents a page 150 of the application 120. In some cases, the page 150 presented by the terminal device 110 may be a specific content display page of the application 120, and the media content item is presented in the content display page. In some embodiments, the content display page refers to a page for displaying or pushing media content items and other related information to users. A group of media content items that may be presented in a content display page may include various types of media content items. The media content item to be presented in the specific content display page may be determined according to the application design requirement. The media content items to be displayed and the number of media content items to be displayed may vary in different scenarios.

In some embodiments, the content display page may include a homepage of the application 120 or a recommended homepage in a group of homepages of the application 120. The recommended content items presented to the user in the recommended homepage are sometimes also referred to as recommended information stream. In some embodiments, the content display page may include other pages under the homepage of the application 120, such as a follow page (where media content items, posted by a group of users followed by the current user, are displayed), a local page (where media content items, posted by other users within the same area range as the current user, are displayed), or media content items aggregated or classified in other manners.

If the information needs to be presented in the application is extensive and disorganized, the information is often presented categorically, so that the user may obtain the information in a more concise manner. Presenting information categorically often needs to set a plurality of navigation tags corresponding to different information on a page. The user may obtain the page corresponding to the tag by switching among different navigation tags. In some embodiments, navigation tags for navigating to different pages may be provided in the application 120. In an embodiment of the present disclosure, a page, including a content display page, may be presented at least by selecting a predetermined navigation tag. That is, the predetermined navigation tag in the application may be used to navigate to the content display page.

As shown in FIG. 2A, a plurality of navigation tags for navigating to various pages are provided on the current page of the application 120, such as "Local", "Follow", "Recommendation", "Homepage", "Friends", and the like. The plurality of navigation tags may also have different levels, for example, the navigation tags "Homepage", "Friends", etc. may be at the first level, the navigation tags "Local", "Follow", "Recommendation" may be at the second level. The navigation tags of the first level, for example, may correspond to a group of pages (for example, a group of homepages), and a page corresponding to the navigation tag of the second level may be, for example, at least one of a group of pages corresponding to the navigation tag of the first level (for example, the recommended homepage corresponding to the navigation tag "recommendation" is one of a group of homepages corresponding to the navigation tag "homepage"). Illustratively, in the example 200A shown in FIG. 2A, the navigation tag 210 is a tag "homepage", and if the terminal device 110 detects a selection operation on the navigation tag 210, the homepage of the application 120 may be presented. For example, the terminal device 110 may present a recommended homepage (that is, the page corresponding to the navigation tag "recommendation") of the plurality of homepages by default. On this basis, if the terminal device 110 detects a selection operation on the navigation tag "follow", the terminal device 110 may switch to presenting a follow homepage (that is, the page corresponding to the navigation tag "follow") of the plurality of homepages.

In an embodiment of the present disclosure, the terminal device 110 presents a specific content display page, for example, a specific content display page of the application 120. The content display page is at least used to present the media content. In some embodiments, the terminal device 110 may present the media content item in any suitable view mode (for example, a default view mode, which may be a view mode preset by the user, or a historical view mode used when the last time the user exits the application and/or the page) in the content display page. In the example 200A shown in FIG. 2A, the navigation tag 210 is a tag "homepage", and by selecting the navigation tag, one of a group of homepages may be presented, such as presenting a recommended homepage. It should be understood that this is merely illustrative and not intended to limit the aspects of the present disclosure. In some embodiments, alternatively or additionally, the content display page may also be presented by detecting a launch operation of the application, e.g., the content display page is a default page presented when the application is launched. When presented after launching the application, the media content item may be presented in a default view mode in the content display page. That is, without a user selection of the navigation tag, the content display page may be the default page after the application 120 is launched.

In an embodiment of the present disclosure, while the specific content display page is presented, if the terminal device 110 detects a preset trigger operation, an operation panel is provided in the active layer of the content display page, the operation panel at least includes a plurality of options corresponding to the plurality of view modes. The plurality of view modes respectively corresponds to different inspection views of media content items in the content display page. In different view modes, the media content items in the content display page may be organized and presented to the user in different views. In addition, in the case of the operation panel being provided, the media content item in the content display page will be presented in the background layer of the content display page.

In an embodiment of the present disclosure, the background layer of the page refers to page content that the user cannot directly operate currently, and the active layer of the page refers to page content that the user may currently directly operate. Therefore, the operation panel in the active layer is an area which the user may directly operate, so as to allow the user to perform corresponding operations on interface elements such as options and controls provided by the operation panel, in particular to flexibly switch the view mode. The media content items in the background layer cannot be not directly operated by the user currently.

In some embodiments, the plurality of view modes may at least include, for example, a single-column view mode, and at least one multi-column view mode (including, but not limited to, a dual-column view mode, a three-column view mode, etc.). The single-column view mode may reduce the cost of thinking and selection of the user, while the at least one multi-column view mode facilitates the user exploring more content of interest. Multiple view modes are provided, which may facilitate the user to compare the difference between the single-column view mode and the at least one multi-column view mode, and then select or switch according to the preference.

In some embodiments, the navigation tag corresponding to the content display page may also be used to trigger presentation of the operation panel. In this case, the preset trigger operation for triggering provision of the operation panel may include a trigger operation on the navigation tag. The trigger operation includes, but is not limited to, a single-click operation, a double-click operation, a long-press operation, and the like on the navigation tag. In some embodiments, alternatively or additionally, the preset trigger operation may further include other trigger operations on the content display page (for example, a long-press operation on the content display page, etc.). The present disclosure does not limit the specific preset trigger operation, and the terminal device 110 may provide the operation panel in the active layer of the content display page in response to detecting any suitable preset trigger operation.

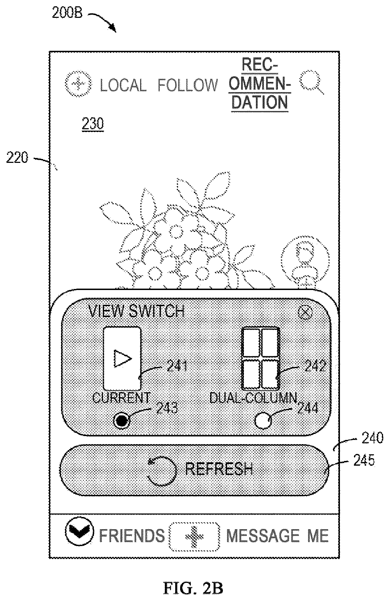

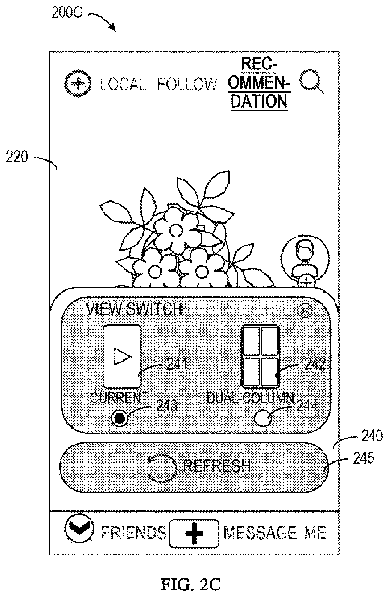

Referring to FIG. 2A to FIG. 2C, if the terminal device 110 detects a trigger operation on the navigation tag 210 in FIG. 2A, the terminal device 110 may present a content display page as shown in the example 200B of FIG. 2B or a content display page as shown in the example 200C of FIG. 2C, where the operation panel 240 is provided. It may be understood that the trigger operation on the navigation tag 210 herein is merely illustrative, and the terminal device 110 may present the content display page shown in the example 200B or the content display page shown in the example 200C in response to detecting a trigger operation (for example, a single-click operation) on another navigation tag (for example, the navigation tag "recommendation" in FIG. 2A) corresponding to the content display page. Each of the content display page shown in example 200B or the content display page shown in example 200C includes a background layer and an active layer.

As shown in FIG. 2B or FIG. 2C, if the plurality of view modes are respectively a single-column view mode and a dual-column view mode, the option 241 and option 242 respectively corresponding to the two view modes may be presented in the operation panel 240. The option 241 and option 242 may, for example, be designed as an identification of the two view modes, respectively. It may be understood that a greater number of options may be included in the operation panel 240, and FIGs. 2B and 2C and other drawings later are merely examples, and the present disclosure does not limit the number of the plurality of options (that is, the number of the plurality of view modes).

In some embodiments, in order to better distinguish the active layer from the background layer to improve the visual experience of the user, the terminal device 110 may further overlay a mask layer on the media content item in the background layer of the content display page. As shown in FIG. 2B, the terminal device 110 may overlay the mask layer 230 on the media content item 220 in the background layer of the example 200B. The mask layer 230 may be a semi-transparent overlaid layer, such that the media content item is still visible to the user. In some embodiments, the overlaid mask layer in the background layer may always be presented before a cancelation of rendering the operation panel.

It may be understood that, if it is determined that the mask layer needs to be overlaid, the terminal device 110 may present the content display page shown in example 200B, and if it is determined that the mask layer does not need to be overlaid (for example, if the user expects to clearly see the media content item in the background layer), the terminal device 110 may present the content display page shown in example 200C.

Before the preset trigger operation for triggering presenting the operation panel is detected, the terminal device 110 may present the media content item in any suitable view mode in the content display page. After the preset trigger operation is detected, the terminal device 110 may present the state of the option corresponding to the current view mode as the selected state in the operation panel in the active layer, and present the state of the option other than the option corresponding to the current view mode in the plurality of options as the unselected state.

Illustratively, as shown in FIG. 2B or FIG. 2C, if the terminal device 110 presents the media content item in the single-column view mode before the preset trigger operation, the terminal device 110 may present the option 241 corresponding to the single-column view mode in the operation panel 240 as the selected state. The terminal device 110 may present the option 241 as the selected state, for example, by performing an emphasizing operation such as highlighting, framing, enlarging, and the like on the option 241. The terminal device 110 may perform no emphasizing operation on an option 242 corresponding to the dual-column view mode to present the option 242 as an unselected state.

In some embodiments, the terminal device 110 may also present a selection control in association with a plurality of options in the operation panel 240. The presentation style of the selection control includes a ring style and a circular style. The terminal device 110 presents a selection control in the ring style, indicating that the option corresponding to the selection control is the selected state, and presents a selection control in the circular style, indicating that the option corresponding to the selection control is the unselected state. As shown in FIG. 2B or FIG. 2C, the terminal device 110 may present the selection control 243 in association with the option 241 of the single-column view mode in the operation panel 242, and present the selection control 244 in association with the option 242 of the dual-column view mode. The terminal device 110 may present the selection control 243 in the operation panel 240 in a ring style to indicate that the option 241 is in the selected state, and present the selection control 244 in the operation panel 240 in a circular style to indicate that the option 242 is in the unselected state.

In an embodiment of the present disclosure, after the operation panel is provided in the active layer of the content display page, if the selection operation on the first option of the plurality of options corresponding to the plurality of view modes in the operation panel is detected, the terminal device 110 presents the media content item in the background layer of the content display page in the first view mode corresponding to the first option, while maintaining the presentation of the operation panel in the active layer of the content display page. The first option herein may be, for example, an option corresponding to a view mode other than the view mode in which the media content item is presented before the preset trigger operation is detected. For example, if the terminal device 110 presents the media content item in the single-column view mode in the background layer of the content display page before the preset trigger operation is detected, the terminal device 110 presents the operation panel including the plurality of options after the preset trigger operation is detected. In response to detecting a selection operation of an option (e.g., an option corresponding to the dual-column view mode) other than the single-column view mode of the plurality of options, the terminal device 110 may present the media content item in a view mode corresponding to the selected option in the background layer of the content display page while maintaining presentation of the operation panel in the active layer of the content display page.

In some embodiments, if the selection operation on the first option is detected, when maintaining the presentation of the operation panel in the active layer, the terminal device 110 may also present the state of the first option in the operation panel as the selected state, and present states of other options other than the first option in the plurality of options in the operation panel as the unselected state.

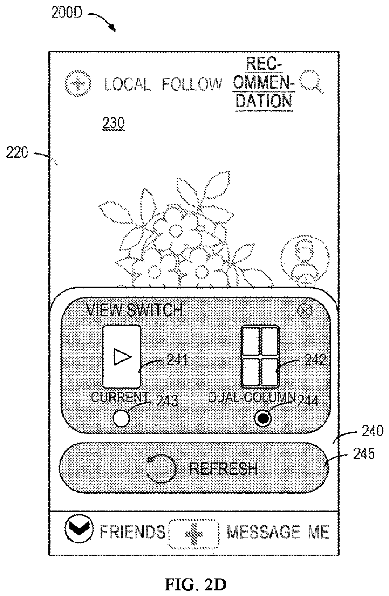

For example, if a selection operation on the option 242 (e.g., a click operation on the option 242 or the selection control 244) is detected in the content display page shown in FIG. 2B, the terminal device 110 may present a content display page as shown in example 200D of FIG. 2D. As shown in FIG. 2D, the terminal device 110 may switch the state of the option 242 to the selected state and switch the state of the option 241 to the unselected state. For example, the terminal device 110 may present the selection control 244 in the operation panel 240 in a ring style to indicate that the option 242 is in the selected state, and present the selection control 243 in the operation panel 240 in a circular style to indicate that the option 241 is in the unselected state.

As described above, in a case that an option corresponding to a view mode is selected, the media content item is presented in a view mode corresponding to the option in a background layer of the content display page. That is, a preview of the view mode selected by the user is provided in the content display page. In some embodiments, in the content display page, the operation panel does not completely cover the media content item, such that the preview of the media content item presented in the corresponding view mode is not completely covered by the operation panel, to allow the user to view the preview effect of the selected view mode. In some embodiments, the operation panel and the media content item may be presented in different areas of the content display page, such that the operation panel will not cover the media content item. In some embodiments, additionally or alternatively, the operation panel may be provided in a transparent or semi-transparent style, allowing the user to view the media content item in the background layer even if the operation panel partially or completely covers the media content item.

Regarding the specific method for switching the view mode, which the terminal device 110 presents media content items, to the first view mode corresponding to the first option, in some embodiments, the terminal device 110 may switch the view mode of the media content item by presenting the transition animation. The transition animation herein may be preset, default, or self-determined by the terminal device 110. For example, an example transition animation is illustrated from FIGs. 2D-2G. In the content display page shown in example 200D, the option 244 in the operation panel 240 corresponding to the dual-column view mode is in the selected state. The terminal device 110 may, in turn, present the content display pages shown in examples 200E and 200F in sequence. That is, the plurality of media content items presented in the currently selected dual-column view mode may be gradually revealed from the previous media content item presented in the single-column view mode. As the presentation effect of the plurality of media content items presented in the dual-column view mode is gradually clear, the previous media content item presented in the single-column view mode is gradually blurred until completely covered by the plurality of media content items presented in the dual-column view mode, and the terminal device 110 presents the content display page of the media content item presented in the dual-column view mode as shown in example 200G.

In some embodiments, after switching to presenting the media content item in the first view mode corresponding to the first option, since the operation panel is still presented in the active layer of the content display page, the user may continue to operate on the operation panel, for example, switch to selecting an option corresponding to the other view mode. The terminal device 110 may further detect a selection operation on another option on the operation panel. If the selection operation of the second option in the plurality of options corresponding to the plurality of view modes is detected, the terminal device 110 may present the media content item in the second view mode corresponding to the second option in the background layer of the content display page, while maintaining the presentation of the operation panel in the active layer. That is, the terminal device 110 will continue to perform the view mode switching operation, to switch the media content item presented in the first view mode to the media content item presented in the second view mode.

The second view mode here may be any suitable view mode different from the previously selected first view mode. For example, if the terminal device 110 presents the media content item in the single-column view mode in the background layer of the content display page before the preset trigger operation is detected, after the preset trigger operation is detected, the terminal device 110 presents the operation panel including the plurality of options. The terminal device 110 may present, in response to detecting the selection operation on the option corresponding to the dual-column view mode, the media content item in the background layer of the content display page in the dual-column view mode. The terminal device 110 may switch back to present the media content item in the single-column view mode in the background layer of the content display page in response to detecting the selection operation on the option corresponding to the single-column view mode.

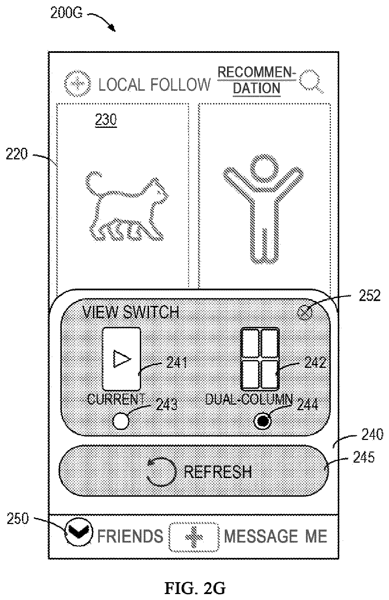

In some embodiments, the operation panel further includes a content refresh control. The terminal device 110 may refresh the media content item presented in the background layer of the content display page in response to detecting a selection operation on the content refresh control. For example, as shown in FIG. 2G, when the option 242 corresponding to the dual-column view mode is in the selected state, the terminal device 110 presents the media content item in a dual-column view mode in the background layer of the content display page. The terminal device 110 refreshes the media content item in the background layer in response to detecting a selection operation on the content refresh control 245, and presents the refreshed media content item in the dual-column view mode in the background layer of the content display page. Therefore, by providing the content refresh control, the user may refresh the media content item in the content display page without needing to cancel the presentation of operation panel, thereby improving the content browsing experience of the user.

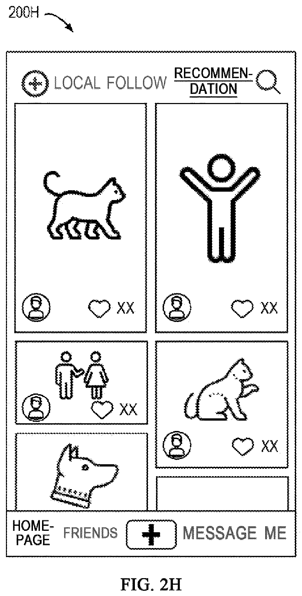

In some embodiments, when the first option is in the selected state, if the cancel display operation on the operation panel is detected, the terminal device 110 may cancel the presentation of the operation panel in the content display page, and cause the media content item in the content display page to be presented in the active layer of the content display page in the first view mode. The cancel display operation herein includes, but is not limited to, a selection operation on a folding control for folding the operation panel, a selection operation on the cancelling control, and a touch operation on any other appropriate area other than the operation panel in the content display page. For ease of understanding, when the operation panel is presented, the presentation effect of presenting the media content item in the first view mode presented by the terminal device 110 in the background layer may be considered as the preview effect of the final presentation effect. The terminal device 110 may determine, in response to detecting a cancel display operation on the operation panel, that a confirmation operation on the preview effect is received, and present the media content item according to the first view mode indicated by the preview effect. For example, as shown in FIG. 2G and FIG. 2H, the terminal device 110 may determine that a cancel display operation is detected on the operation panel 240 in response to detecting a selection operation on the folding control 250, the canceling control 252, or other areas other than the operation panel 240 in the example 200G. The terminal device 110 may further cancel the presentation of the operation panel 240. After the operation panel 240 is folded, the content display page shown in example 200H is presented. In the content display page shown in example 200H, the terminal device 110 may present the media content item in the last selected dual-column view mode. Since the presentation of the operation panel 240 is cancelled, the media content item is presented in the active layer of the content display page. The user may directly operate the presented media content item.

In this way, since the operation panel always maintains the presentation when the user selects the view and the panel is not actively folded, the user may always know the optional view mode through the presentation effect of the preview view mode.

In summary, according to the embodiments of the present disclosure, by providing the preset operation panel for view switching, and providing the preview effect of the switching result on the background layer in the process of selecting the view by the user, the user may quickly and directly preview the content display effect under different views, so that the satisfactory mode may be selected from the plurality of view modes. In addition, since the operation panel always maintains presenting, the user is always able to know the optional view mode. In this way, it is possible to allow easy switching to other view modes before the user does not select a satisfactory view mode.

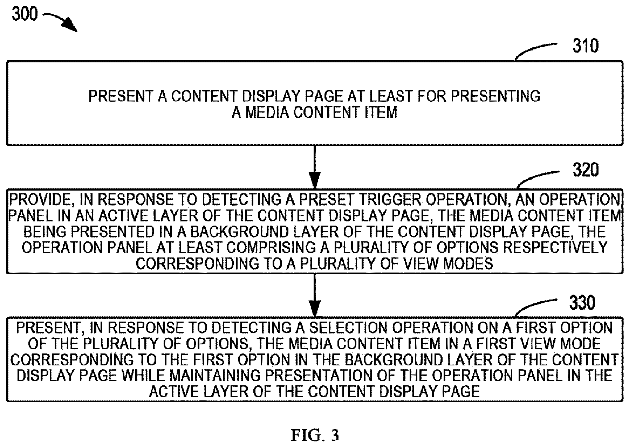

FIG. 3 shows a flowchart of a process 300 for page interaction according to some embodiments of the present disclosure. Process 300 may be implemented at terminal device 110. The process 300 is described below with reference to FIG. 1.

In block 310, the terminal device 110 presents a content display page at least for presenting the media content item.

At block 320, the terminal device 110 provides, in response to detecting a preset trigger operation, an operation panel in an active layer of the content display page, the media content item is presented in a background layer of the content display page, the operation panel at least comprises a plurality of options respectively corresponding to a plurality of view modes.

At block 330, the terminal device 110 presents, in response to detecting a selection operation on a first option of the plurality of options, the media content item in a first view mode corresponding to the first option in the background layer of the content display page while maintaining presentation of the operation panel in the active layer of the content display page.

In some embodiments, the process 300 further comprises: in response to detecting a selection operation on the first option, while maintaining presentation of the operation panel in the active layer, presenting a state of the first option in the operation panel as a selected state, and presenting a state of an option other than the first option in the plurality of options in the operation panel as an unselected state.

In some embodiments, the media content item presented in the background layer of the content display page is overlaid with a mask layer. In some embodiments, the media content item is not completely coverd by the operation panel in the content display page.

In some embodiments, the operation panel further comprises a content refresh control. The process 300 further comprises: presenting, in response to detecting a selection operation on the content refresh control with the first option in a selected state, the refreshed media content item in the first view mode in the background layer of the content display page.

In some embodiments, the content display page is presented at least by selecting a predetermined navigation tag, and the preset trigger operation comprises a trigger operation on the navigation tag.

In some embodiments, the process 300 further comprises: presenting, in response to detecting a selection operation on a second option of the plurality of options after a selection operation on the first option, the media content item in a second view mode corresponding to the second option in the background layer of the content display page while maintaining presentation of the operation panel in the active layer.

In some embodiments, the process 300 further comprises: in response to detecting a cancel display operation on the operation panel with the first option in a selected state, canceling presentation of the operation panel in the content display page; and causing a media content item in the content display page to be presented in the first view mode in the active layer of the content display page.

In some embodiments, the media content item is presented in a third view mode in the content display page before the preset trigger operation is detected, and where providing the operation panel in the active layer of the content display page in response to detecting the preset trigger operation comprises: presenting a state of the third option corresponding to the third view mode in the operation panel as a selected state; and presenting a state of an option other than the third option in the plurality of options in the operation panel as an unselected state.

In some embodiments, the plurality of view modes at least comprise: a single-column view mode, and at least one multi-column view mode.

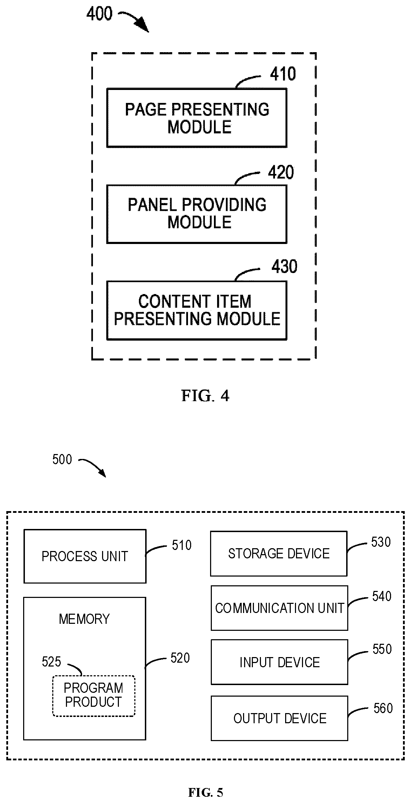

Embodiments of the present disclosure also provide a corresponding apparatus for implementing the above method or process. FIG. 4 illustrates a schematic structural block diagram of an apparatus 400 for page interaction according to some embodiments of the present disclosure. The apparatus 400 may be implemented as the terminal device 110 or included in the terminal device 110. The various modules/components in the apparatus 400 may be implemented by hardware, software, firmware, or any combination thereof.

As shown in FIG. 4, the apparatus 400 comprises a page presenting module 410 configured to present a content display page at least for presenting a media content item. The apparatus 400 further comprises a panel providing module 420 configured to provide, in response to detecting a preset trigger operation, an operation panel in an active layer of the content display page, the media content item being presented in a background layer of the content display page, the operation panel at least comprising a plurality of options respectively corresponding to a plurality of view modes. The apparatus 400 further comprises a content item presenting module 430 configured to present, in response to detecting a selection operation on a first option of the plurality of options, the media content item in a first view mode corresponding to the first option in the background layer of the content display page while maintaining presentation of the operation panel in the active layer of the content presentation page.

**In** some embodiments, the apparatus 400 further comprises: a state switching module configured to, in response to detecting a selection operation on the first option, while maintaining presentation of the operation panel in the active layer, present a state of the first option in the operation panel as a selected state, and present a state of an option other than the first option in the plurality of options in the operation panel as an unselected state.

In some embodiments, the media content item presented in the background layer of the content display page is overlaid with a mask layer. In some embodiments, the media content item is not completely coverd by the operation panel in the content display page.

In some embodiments, the operation panel further comprises a content refresh control, and the apparatus 400 further comprises: a refresh module configured to present, in response to detecting a selection operation on the content refresh control with the first option in a selected state, the refreshed media content item in the first view mode in the background layer of the content display page.

In some embodiments, the content display page is presented at least by selecting a predetermined navigation tag, and the preset trigger operation comprises a trigger operation on the navigation tag.

In some embodiments, the apparatus 400 further comprises: a second content item presenting module configured to present, in response to detecting a selection operation on a second option of the plurality of options after a selection operation on the first option, the media content item in a second view mode corresponding to the second option in the background layer of the content display page while maintaining presentation of the operation panel in the active layer.

In some embodiments, the apparatus 400 further comprises: a cancel module configured to, in response to detecting a cancel display operation on the operation panel with the first option in a selected state, cancel presentation of the operation panel in the content display page; a presenting module configured to cause a media content item in the content display page to be presented in the first view mode in the active layer of the content display page.

In some embodiments, the media content item is presented in a third view mode in the content display page before the preset trigger operation is detected, and the panel providing module 420 comprises a state presenting module configured to present a state of the third option corresponding to the third view mode in the operation panel as a selected state; and present a state of an option other than the third option in the plurality of options in the operation panel as an unselected state.

In some embodiments, the plurality of view modes at least comprise: a single-column view mode, and at least one multi-column view mode.

The units and/or modules included in the apparatus 400 may be implemented in various manners, including software, hardware, firmware, or any combination thereof. In some embodiments, one or more units and/or modules may be implemented using software and/or firmware, such as machine-executable instructions stored on a storage medium. In addition to or as an alternative to machine-executable instructions, some or all of the units and/or modules in the apparatus 400 may be implemented, at least in part, by one or more hardware logic components. By way of example and not limitation, illustrative types of hardware logic components that may be used include field programmable gate arrays (FPGAs), application specific integrated circuits (ASICs), application specific standards (ASSPs), system-on-a-chip (SOCs), complex programmable logic devices (CPLDs), and the like.

It should be understood that one or more steps of the above methods may be performed by a suitable electronic device or a combination of electronic devices. Such an electronic device or a combination of electronic devices may include, for example, the terminal device 110 in FIG. 1.

FIG. 5 illustrates a block diagram of an electronic device 500 in which one or more embodiments of the present disclosure may be implemented. It should be understood that the electronic device 500 illustrated in FIG. 5 is merely illustrative and should not constitute any limitation on the functionality and scope of the embodiments described herein. The electronic device 500 shown in FIG. 5 may be configured to implement the terminal device 110 in FIG. 1.

As shown in FIG. 5, the electronic device 500 is in the form of a general-purpose electronic device. Components of the electronic device 500 may include, but are not limited to, one or more processors or processing units 510, a memory 520, a storage device 530, one or more communication units 540, one or more input devices 550, and one or more output devices 560. The processing unit 510 may be an actual or virtual processor and capable of performing various processes according to programs stored in the memory 520. In multiprocessor systems, multiple processing units execute computer-executable instructions in parallel to improve parallel processing capabilities of electronic device 500.

**The** electronic device 500 typically includes a plurality of computer storage medium. Such medium may be any available medium accessible to the electronic device 500, including, but not limited to, volatile and non-volatile medium, removable and non-removable medium. The memory 520 may be volatile memory (e.g., registers, caches, random access memory (RAM)), non-volatile memory (e.g., read-only memory (ROM), electrically erasable programmable read-only memory (EEPROM), flash memory), or some combination thereof. Storage device 530 may be a removable or non-removable medium and may include a machine-readable medium, such as a flash drive, magnetic disk, or any other medium, which may be capable of storing information and/or data and may be accessed within electronic device 500.

The electronic device 500 may further include additional removable/non-removable, volatile/non-volatile storage medium. Although not shown in FIG. 5, a disk drive for reading or writing from a removable, nonvolatile magnetic disk (e.g., a "floppy disk") and an optical disk drive for reading or writing from a removable, nonvolatile optical disk may be provided. In these cases, each drive may be connected to a bus (not shown) by one or more data medium interfaces. The memory 520 may include a computer program product 525 having one or more program modules configured to perform various methods or actions of various embodiments of the present disclosure.

The communication unit 540 implements communicating with another electronic device through a communication medium. Additionally, the functionality of components of the electronic device 500 may be implemented in a single computing cluster or multiple computing machines capable of communicating over a communication connection. Thus, the electronic device 500 may operate in a networked environment using logical connections with one or more other servers, network personal computers (PCs), or another network node.

The input device 550 may be one or more input devices, such as a mouse, a keyboard, a trackball, or the like. The output device 560 may be one or more output devices, such as a display, a speaker, a printer, or the like. The electronic device 500 may also communicate with one or more external devices (not shown) through the communication unit 540 as needed, external devices such as storage devices, display devices, etc. , communicate with one or more devices that enable a user to interact with the electronic device 500, or communicate with any device (e.g., a network card, a modem, etc. ) that enables the electronic device 500 to communicate with one or more other electronic devices. Such communication may be performed via an input/output (I/O) interface (not shown).

According to example implementations of the present disclosure, there is provided a computer-readable storage medium storing a computer program thereon, the computer program executable by a processor to implement the method described above. According to example implementations of the present disclosure, a computer program product is further provided, the computer program product being tangibly stored on a non-transitory computer-readable medium and including computer-executable instructions, the computer-executable instructions being executed by a processor to implement the method described above.

Aspects of the present disclosure are described herein with reference to flowcharts and/or block diagrams of methods, apparatuses, devices, and computer program products implemented in accordance with the present disclosure. It should be understood that each block of the flowchart and/or block diagram, and combinations of blocks in the flowcharts and/or block diagrams, may be implemented by computer-readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce apparatus to implement the functions/actions specified in one or more blocks of the flowchart and/or block diagram. These computer-readable program instructions may also be stored in a computer-readable storage medium that cause the computer, programmable data processing apparatus, and/or other devices to function in a particular manner, such that the computer-readable medium storing instructions includes a manufactured product including instructions to implement aspects of the functions/actions specified in one or more blocks of the flowchart and/or block diagram.

The computer-readable program instructions may be loaded onto a computer, other programmable data processing apparatus, or other device, such that a series of operational steps are performed on a computer, other programmable data processing apparatus, or other device to produce a computer-implemented process such that the instructions executed on a computer, other programmable data processing apparatus, or other device implement the functions/actions specified in one or more blocks of the flowchart and/or block diagram.

The flowchart and block diagrams in the drawings show architecture, functionality, and operation possibly implement by systems, methods, and computer program products according to various implementations of the present disclosure. In this regard, each block in the flowchart or block diagram may represent a module, program segment, or portion of an instruction that contains one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are exemplary, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles and practical applications of the implementations, or improvements to techniques in the marketplace, or to enable others of ordinary skill in the art to understand the various implementations disclosed herein.

## Claims

1. A method for page interaction, comprising:
presenting a content display page at least for presenting a media content item;
providing, in response to detecting a preset trigger operation, an operation panel in an active layer of the content display page, the media content item being presented in a background layer of the content display page, the operation panel at least comprising a plurality of options respectively corresponding to a plurality of view modes; and
presenting, in response to detecting a selection operation on a first option of the plurality of options, the media content item in a first view mode corresponding to the first option in the background layer of the content display page while maintaining presentation of the operation panel in the active layer of the content display page.

2. The method of claim 1, further comprising:
in response to detecting a selection operation on the first option, while maintaining presentation of the operation panel in the active layer,
presenting a state of the first option in the operation panel as a selected state, and
presenting a state of an option other than the first option in the plurality of options in the operation panel as an unselected state.

3. The method of claim 1, wherein the media content item presented in the background layer of the content display page is overlaid with a mask layer, and/or
wherein the media content item is not completely coverd by the operation panel in the content display page.

4. The method of claim 1, wherein the operation panel further comprises a content refresh control, and the method further comprises:
presenting, in response to detecting a selection operation on the content refresh control with the first option in a selected state, the refreshed media content item in the first view mode in the background layer of the content display page.

5. The method of claim 1, wherein the content display page is presented at least by selecting a predetermined navigation tag, and the preset trigger operation comprises a trigger operation on the navigation tag.

6. The method of claim 1, further comprising:
presenting, in response to detecting a selection operation on a second option of the plurality of options after a selection operation on the first option, the media content item in a second view mode corresponding to the second option in the background layer of the content display page while maintaining presentation of the operation panel in the active layer.

7. The method of claim 1, further comprising:
in response to detecting a cancel display operation on the operation panel with the first option in a selected state,
canceling presentation of the operation panel in the content display page; and
causing a media content item in the content display page to be presented in the first view mode in the active layer of the content display page.

8. The method of claim 1, wherein the media content item is presented in a third view mode in the content display page before the preset trigger operation is detected, and
wherein providing the operation panel in the active layer of the content display page in response to detecting the preset trigger operation comprises:
presenting a state of the third option corresponding to the third view mode in the operation panel as a selected state; and
presenting a state of an option other than the third option in the plurality of options in the operation panel as an unselected state.

9. The method of any of claims 1 to 8, wherein the plurality of view modes at least comprise: a single-column view mode, and at least one multi-column view mode.

10. An apparatus for page interaction, comprising:
a page presenting module configured to present a content display page at least for presenting a media content item;
a panel providing module configured to provide, in response to detecting a preset trigger operation, an operation panel in an active layer of the content display page, the media content item being presented in a background layer of the content display page, the operation panel at least comprising a plurality of options respectively corresponding to a plurality of view modes; and
a content item presenting module configured to present, in response to detecting a selection operation on a first option of the plurality of options, the media content item in a first view mode corresponding to the first option in the background layer of the content display page while maintaining presentation of the operation panel in the active layer of the content display page.

11. An electronic device, comprising:
at least one processing unit; and
at least one memory coupled to the at least one processing unit and storing instructions for execution by the at least one processing unit, the instructions upon execution by the at least one processing unit, causing the electronic device to perform the method of any of claims 1 to 9.

12. A computer-readable storage medium storing a computer program thereon, the computer program executable by a processor to implement the method of any of claims 1 to 9.
